# EUROPÄISCHE PATENTSCHRIFT

(11) **EP 2 270 356 B1**
(45) Veröffentlichungstag und Bekanntmachung des Hinweises auf die Patenterteilung: **30.05.2012**
(21) Anmeldenummer: 10161566.4
(22) Anmeldetag: 30.04.2010
(51) Int. Cl.: F16F 9/54, F16F 1/374, F16F 1/376, B60G 13/00, B60G 15/06

(54) **Elastische Buchse**
Elastic socket
Douille élastique

(43) Veröffentlichungstag der Anmeldung: 05.01.2011
(73) Patentinhaber: Ford Global Technologies, LLC, Dearborn, MI 48126 (US)
(72) Erfinder: Neureder, Uwe, 42799, Leichlingen (DE)
(74) Vertreter: Drömer, Hans-Carsten

(56) Entgegenhaltungen:
- EP-A1- 0 816 140
- DE-A1- 19 923 847
- DE-A1- 19 932 868
- US-A- 4 747 474
- US-A- 5 487 535
- US-A1- 2003 151 181
- US-A1- 2004 079 600

## Beschreibung

Die Erfindung betrifft eine elastische Buchse, welche ein elastisches Element aufweist, welches von einem Halteelement aufgenommen ist, wobei das Halteelement einen Anschlagbereich hat, der zu einem korrespondierenden Gegenanschlagbereich des elastischen Elementes so beabstandet ist, dass in einer neutralen Position, also in einem im wesentlichen nicht ausgelenkten Zustand der elastischen Buchse ein, in seinem Betrag überwiegend gleich bleibend verlaufender Spalt ausgebildet ist.

Die elastische Buchse kann zum Beispiel Bestandteil eines oberen Dämpferlagers oder Federbeinstützlagers eines Kraftfahrzeuges sein. Der nicht ausgelenkte oder auch unbelastete Zustand der elastischen Buchse ist die definierte Mittellage im Zustand des statischen Gleichgewichts unter Berücksichtigung der Gaskraft des Stoßdämpfers.

Die US 2003/151181 A1 offenbart ein Federbeinstützlager, welches ein Tragelement aufweist, über das ein Federbeindämpfer am Fahrzeugaufbau abstützbar ist, und mit einem Verbindungselement, welches an einer Kolbenstange des Federbeindämpfers befestigbar ist. Zwischen dem Verbindungselement und dem Tragelement sind Federelemente angeordnet. Ein erstes Federelement ist radial zwischen dem Verbindungselement und dem Tragelement angeordnet. Ein zweites Federelement bildet zusammen mit einem Abschnitt des Tragelementes einen Anschlag für die Kolbenstange in axialer Richtung. Ein Abschnitt des Tragelementes, welcher Teil des Anschlags ist, ist annähernd kugelförmig oder konisch ausgeführt.

Die EP 0 816 140 B1 befasst sich mit einem Federbeinstützlager für Radaufhängungen in einem Kraftfahrzeug. Das Federbeinstützlager besteht aus:
einem im vertikalen Schnitt topfförmigen, metallischen Gehäuse,
einem in diesem Gehäuse angeordneten Gummipuffer,
einem mit einem Dämpfer verbindbaren Tragstück, welches mit sich radial erstreckenden Vorsprüngen in den fest mit ihm verbundenen Gummipuffer hineinragt,
einem ringförmigen Federpuffer, gegen den sich das obere Ende einer den Dämpfer umgebenden Schraubenfeder abstützt,
einem radial gerichteten Gehäuseflansch, der ein Widerlager für den Federpuffer bildet,
einer an einem Kraftfahrzeugbauteil befestigbaren, den Gummipuffer an seiner Oberseite abdeckenden Deckelplatte, die mit dem Gehäuseflansch verbunden ist, und
einem an der Unterseite des Gehäuses befindlichen, den Dämpfer radial führenden Kragenrand, der mit dem metallischen Gehäuse einstückig aus Blech geformt ist.

Das Gehäuse ist mit der Deckelplatte verstemmt. Auf der sich an dem Gehäuseflansch abstützenden Seite des Federpuffers sind bereichsweise Ausnehmungen mit sich in Umfangsrichtung belastungsunabhängig ändernder Geometrie vorgesehen.

Die DE 199 32 868 A1 betrifft ein Federbein. Ein mit einem Ende einer Kolbenstange zusammenwirkender Federteller ist gegenüber der Kolbenstange kardanisch bewegbar angeordnet. Hierzu ist ein elastisches Element vorgesehen.

Für das obere Federbeinstützlager, welches auch als Dämpferbuchse bezeichnet werden kann, sind nicht lineare, also progressive Steifigkeitseigenschaften in axialer Richtung erwünscht. Dabei muß ein Kompromiß zwischen einer geringen und einer hohen Steifigkeit gefunden werden. Einerseits ist eine geringe Steifigkeit erforderlich bei einer kleinen Auslenkung um das Geräuschverhalten (NVH = Noise Vibration Harshness) zu verbessern. Andererseits wird eine hohe Steifigkeit bei einer großen Auslenkung erforderlich, um die Dämpferkräfte aufnehmen zu können, ohne dass eine zu große Auslenkung in der elastischen Buchse bzw. in der Dämpferbuchse auftritt, so dass sich komfortable und zugleich agile Fahr- und Lenkungseigenschaften des Kraftfahrzeugs ergeben.

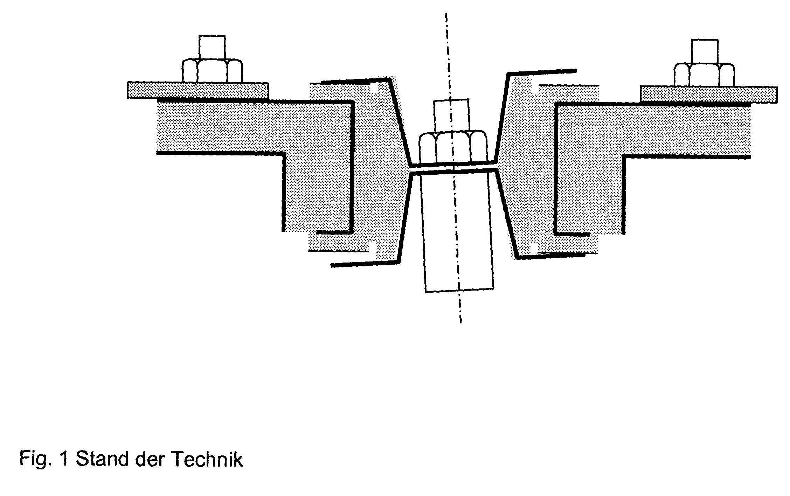

Eine solche, meist rotationssymmetrische Dämpferbuchse ist zum Beispiel gemäß Figur 1 in bekannter Weise ausgeführt. Die progressive Steifigkeit wird beispielsweise mit einem Halteelement, zum Bespiel in der Ausgestaltung als metallische Platte erreicht. Das Halteelement weist einen im Wesentlichen U-förmigen Grundkörper auf, der einen Basissteg und U-Schenkel hat. An den U-Schenkeln schließen sich jeweils gegenläufig orientierte Flansche an, welche zumindest abschnittsweise den Anschlagbereich aufweisen. Das Halteelement ist im Querschnitt gesehen aus zwei Grundkörpern gebildet, die mit ihrem jeweiligen Basissteg rückseitig aneinander liegen, so dass ein in Zeichnungsebene gesehen offener Aufnahmebereich gebildet ist. Das elastische Element ist bezogen auf eine Mittelachse außenseitig an dem Halteelement angeordnet, und liegt zum Teil an dem Flansch an. Das elastische Element weist eine Nut, bzw. eine Radialnut auf, wobei die Nut auf ihrer von der Mittelachse wegorientierten Seite eine Stufe aufweist, so dass der Gegenanschlagbereich gebildet. Insofern ist das elastische Element in diesem Bereich mit einem geringeren Durchmesser ausgeführt, als auf der zur Mittelachse orientierten Seite der Nut. Der Anschlagbereich ist so zum Gegenanschlagbereich mittels des Spaltes beabstandet. Wie in Figur 1 deutlich zu sehen, sind sowohl der Anschlagbereich, also ein Abschnitt des Flansches, als auch der Gegenanschlagbereich plan ausgeführt. Sobald die Buchse unter Einwirkung z. B. der Dämpferkraft um ein bestimmtes Maß ausgelenkt wird, gelangt der Anschlagbereich in Kontakt mit der Gegenanschlagfläche. Insofern sind der Anschlagbereich und der Gegenanschlagbereich als Endanschläge, wenngleich mit endlicher Steifigkeit, anzusehen, welche die gewünschte progressive Steifigkeits- bzw. Federcharakteristik erzeugen.

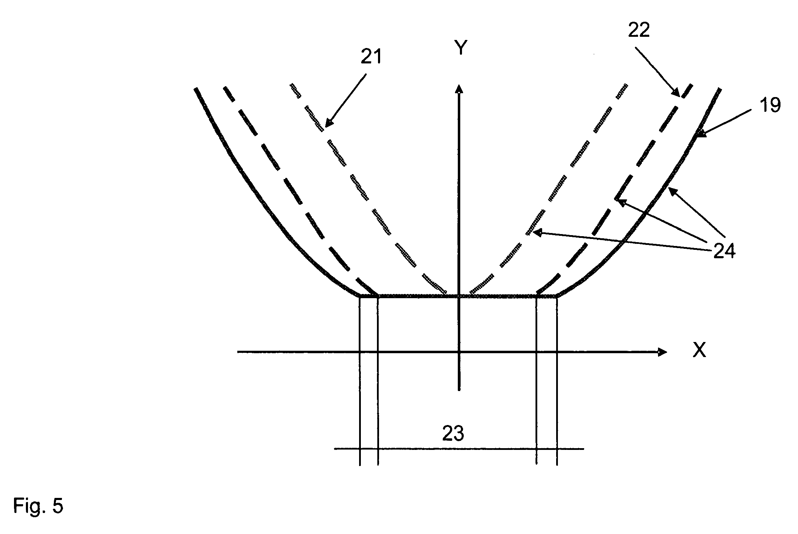

Bei solchen Dämpferbuchsen wurde beobachtet, dass sich die axialen Steifigkeitseigenschaften mit einer in der Blattebene oder senkrecht dazu dargestellten Kippbewegung verändern, bzw. dass die Dämpferbuchsen empfindlich gegen winklige Bewegungen oder auch kardanische Bewegungen sind. Solche Abweichungen aus der idealen, also wenn z. B. die Kolbenstangeachse nicht parallel zur Buchsenachse ist, sind möglich aufgrund insbesondere von Karosserie-, aber auch Chassis- und Radaufhängungstoleranzen oder der Radaufhängungskinematik. Ein solcher Zustand ist beispielhaft in Figur 1 dargestellt. Wie erkennbar, ist der Anschlagbereich aus seiner horizontal ausgerichteten Position winklig herausgedreht, so dass dessen freie Kante in Richtung zum Gegenanschlagbereich orientiert ist und so relativ früh mit dem Gegenanschlagbereich in Kontakt tritt. Dieser Kontakt verändert unmittelbar die Steifigkeits- bzw. Federeigenschaften, und zwar so, dass der lineare Bereich kleiner wird und die Progression früher beginnt, wie Figur 5 anhand des entsprechenden Graphen 21 erläutert. Auf Figur 5 wird weiter unten näher eingegangen. Damit werden aber auch unmittelbar die Isolations- und Dämpfungseigenschaften des Systems "Dämpfer mit Dämpferbuchse", und damit der Fahrkomfort und die Fahrzeugreaktionen beim Anlenken in Summe zum schlechteren hin verändert, Insofern ist das bekannte System extrem empfindlich gegen Abweichungen aus der idealen, welche z. B. aufgrund der Kinematik der (Rad-)Aufhängung oder Karosserietoleranzen erzeugt wird.

Der Erfindung liegt die Aufgabe zugrunde, eine Dämpferbuchse mit einfachen Mitteln so zu verbessern, dass die Nachteile wie zu Figur 1 beschrieben behoben oder zumindest verringert sind.

Erfindungsgemäß wird die Aufgabe durch eine elastische Buchse mit den Merkmalen des Anspruchs 1 gelöst, wobei zumindest der Anschlagbereich des Halteelementes und der Gegenanschlagbereich des elastischen Elementes im Querschnitt gesehen mit einem sphärischen Verlauf ausgeführt sind.

Zweckmäßig ist, wenn der Anschlagbereich und der Gegenanschlagbereich gleich orientierte Wölbungen aufweisen, welche bezogen auf eine Horizontalachse nach außen, also konvex gewölbt sind.

Günstiger Weise weist der Spalt einen kreisartigen Verlauf auf.

Der Spalt zwischen dem Anschlagbereich und dem Gegenanschlagbereich weist bevorzugt einen gleich bleibenden Betrag auf wenn die Dämpferbuchse in ihrer neutralen Position ist. Der Spalt muß im kardanisch nicht ausgelenkten Zustand nicht notwendigerweise überall gleich groß sein. Wesentlich ist, dass sich der Spalt unter kardanischer Auslenkung nicht oder nur wenig verändert. Der Spalt hat eine resultierende (kreisförmige) Mittellinie, deren Mittelpunkt, also der Kreismittelpunkt, auf einer Mittelachse des elastischen Elementes liegt. Auf dieser Mittelachse liegt auch das elastische Zentrum der Dämpferbuchse. Günstig ist, wenn der Radius der (kreisförmigen) Mittellinie, also des Spaltes so bemessen ist, dass der Kreismittelpunkt mit dem elastischen Zentrum der Dämpferbuchse zusammenfällt. Wird die Dämpferbuchse aus ihrer neutralen Position herausgedreht bzw. gekippt, bliebe so der Spaltbetrag konstant. Aufgrund von Bauraumbeschränkungen wird diese zweckmäßige Ausgestaltung aber nicht immer erreichbar sein, weswegen günstiger Weise vorgesehen ist, den Radius des Spaltes so zu wählen, dass der axiale Abstand zwischen dem Kreismittelpunkt des Spaltes und dem Zentrum der Dämpferbuchse so klein wie möglich ist, denn ein bezogen auf den idealen Radius des Spaltes etwas größerer Radius verbessert die Robustheit der Progression gegen z. B. kardanische Bewegungen im Vergleich zu einer Ausgestaltung von Anschlag- und Gegenanschlagbereich mit geradlinigem Verlauf.

Wesentlich ist also, dass der Anschlagbereich und der Gegenanschlagbereich gewölbt bzw. konvex mit jeweils gleicher Orientierung und jeweils gleichem Betrag ausgeführt ist, so dass eine gegen Kippbewegungen bzw. kardanische Bewegung unempfindliche Dämpferbuchse zur Verfügung gestellt wird, denn bei einer Kippbewegung bzw. kardanischen Bewegung aus der neutralen Position heraus ist ein relativ frühzeitiges punktförmiges Anlegen der freien Kante des Anschlagbereiches an dem Gegenanschlagbereich vermieden. Mit der Erfindung wird auch bei einer Kippbewegung bzw. kardanischen Bewegung aus der neutralen Position heraus erreicht, dass der lineare Bereich im Vergleich zum Stand der Technik nicht oder nur unwesentlich kleiner wird, so dass die Progression, idealerweise unverändert im Vergleich zum kardanisch nicht ausgelenkten Zustand nicht verfrüht beginnt.

In einer ersten Ausgestaltung ist das Dämpferelement wie zum Stand der Technik gemäß Figur 1 ausgeführt, allerdings mit dem Unterschied der konvexen Ausgestaltung des Anschlag- und Gegenanschlagbereiches. Das elastische Element kann als Gummielement ausgeführt sein, und ist bezogen auf die Mittelachse außenseitig hinreichend mit den U-Schenkeln und einem Abschnitt des Flansches verbunden.

In einer weiteren Ausgestaltung kann vorgesehen sein, das Halteelement aus im Querschnitt gesehen oberen und unteren Elementen zu bilden, welche so ausgeführt sind, dass ein im Querschnitt gesehen ellipsenartiger Innenraum gebildet ist, wenn beide Elemente miteinander verbunden sind. Das jeweils obere und untere Element weist dabei günstiger Weise die vorteilhaft ausgeführten Anschlagbereiche auf, welche entsprechend konvex als Flansch ausgeführt sind. Die jeweils aufeinander zu orientierten Flansche sind mit ihren Stirnkanten beabstandet, so dass eine Eingriffsöffnung gebildet wird, in welche die Dämpferkolbenstange einführbar ist. Das elastische Element ist in dem Innenraum angeordnet und weist zweckmäßiger Weise den korrespondierend zum Anschlagbereich ausgeführten Gegenanschlagbereich auf, welcher also auch konvex ausgeführt ist, wobei der Spalt zwischen beiden Bereichen angeordnet ist. Mit dem elastischen Element ist ein Befestigungselement hinreichend verbunden, welches sich im Querschnitt gesehen quer durch den Innenraum erstreckt, so dass die jeweils seitlichen Befestigungsbereiche des Befestigungselement von dem elastischen Element umfaßt sind, bzw. darin befestigt sind, wobei hier auf den Stand der Technik verwiesen werden kann. Das Befestigungselement dient zum Befestigen der Kolbenstange des Dämpfers bzw. der Dämpferkolbenstange.

Wesentlich ist bei dieser Ausgestaltung, wie zuvor, dass sowohl der jeweilige Anschlagbereich als auch der jeweils dazu korrespondierende Gegenanschlagbereich bezogen auf eine horizontale Mittellinie konvex ausgeführt ist, so dass sich der kreisförmig ausgeführte Spalt ergibt, der einen solchen Radius aufweist, dass dessen Kreismittelpunkt möglichst nahe an dem elastischen Zentrum der Dämpferbuchse angeordnet ist.

Insofern ist der Erfindungsgedanke, sphärisch ausgeführte Anschlagbereiche und korrespondierend dazu sphärisch ausgeführte Gegenanschlagbereiche vorzusehen, auf jegliche Dämpferbuchse anzuwenden, um so gleichbleibende oder überwiegend gleichbleibende Federkennlinien bzw. Progression zu erhalten, da auch bei kardanischer Auslenkung der volle oder noch ein gewisser linearer Bereich zur Verfügung steht. In besonders zweckmäßiger Anwendung eignet sich die Dämpferbuchse zum Einsatz als oberes Dämpfer- oder Federbeinstützlager einer Radaufhängung eines Kraftfahrzeuges.

Figur 1 zeigt eine Dämpferbuchse nach dem Stand der Technik. Weitere vorteilhafte Ausgestaltungen der Erfindung sind in den Unteransprüchen und der folgenden Figurenbeschreibung offenbart. Es zeigen:
- Fig.2: eine Dämpferbuchse in einer neutralen Position,
- Fig.3: die Dämpferbuchse aus Figur 2 in einer winklig ausgelenkten Position,
- Fig. 4: eine Dämpferbuchse in einer weiteren Ausgestaltung,
- Fig. 5: Kennlinien bezogen auf die vorteilhaft ausgeführten Dämpferbuchsen im Vergleich zum Stand der Technik, und
- Fig. 6: eine Dämpferbuchse nach Figur 4 mit beispielhaften Verdickungen.

In den unterschiedlichen Figuren sind gleiche Teile stets mit denselben Bezugszeichen versehen, so dass diese in der Regel auch nur einmal beschreiben werden. Die Figuren 1 bis 4 und 6 sind natürlich nur als Prinzipskizzen anzusehen.

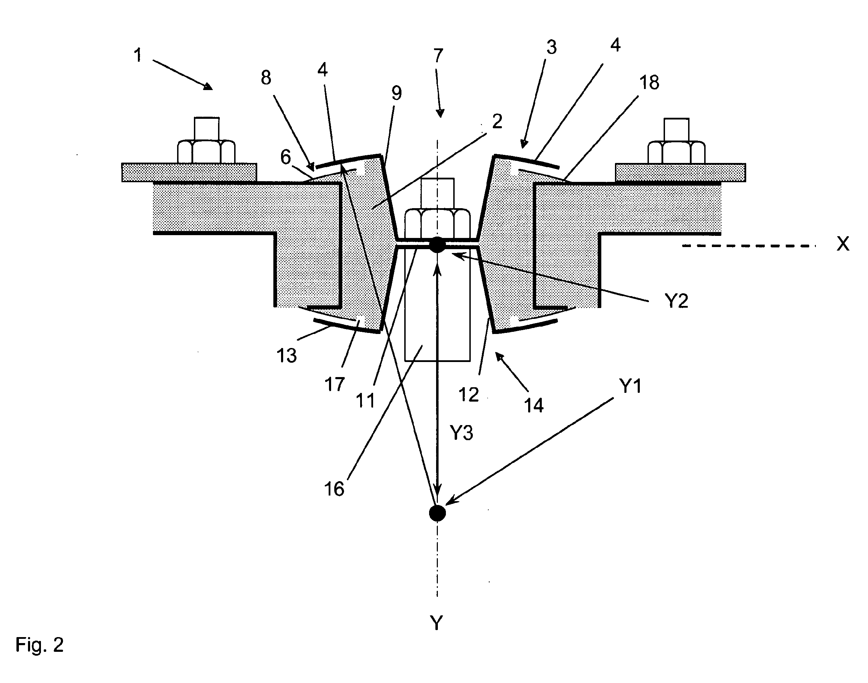

Figur 2 zeigt eine elastische Buchse 1 bzw. Dämpferbuchse 1, welche ein elastisches Element 2 aufweist, welches von einem Halteelement 3 aufgenommen ist, wobei das Halteelement 3 einen Anschlagbereich 4 hat, der zu einem korrespondierenden Gegenanschlagbereich 6 des elastischen Elementes 2 so beabstandet ist, dass in einer neutralen Position 7, also in einem im wesentlichen nicht ausgelenkten Zustand der elastischen Buchse 1 ein, in seinem Betrag bevorzugt gleich bleibend verlaufender Spalt 8 ausgebildet ist. Der Spalt 8 muß im kardanisch nicht ausgelenkten Zustand nicht notwendigerweise überall gleich groß sein. Wesentlich ist, dass sich der Spalt 8 unter kardanischer Auslenkung nicht oder nur wenig verändert. Vorteilhaft ist vorgesehen, dass der Anschlagbereich 4 des Halteelementes 3 und der Gegenanschlagbereich 6 des elastischen Elementes 2 im Querschnitt gesehen mit einem sphärischen Verlauf, also bezogen auf eine horizontale Mittellinie X nach außen gewölbt bzw. konvex verlaufend ausgeführt sind.

Das Halteelement 3 weist einen im Wesentlichen U-förmigen Grundkörper 9 auf, der einen Basissteg 11 und U-Schenkel 12 hat. An den U-Schenkeln 12 schließen sich jeweils gegenläufig orientierte Flansche 13 an, welche zumindest abschnittsweise den Anschlagbereich 4 aufweisen. Das Halteelement 3 ist im Querschnitt gesehen aus zwei Grundkörpern 9 gebildet, die mit ihrem jeweiligen Basissteg 11 rückseitig aneinander liegen, so dass ein in Zeichnungsebene gesehen offener Aufnahmebereich 14 gebildet ist, in dem z. B. eine Dämpferkolbenstange 16 eines Federbeins befestigt ist, wobei von dem Federbein lediglich ein Kolbenstangenabschnitt gezeigt ist. Das elastische Element 2, in der beispielhaften Ausgestaltung als Gummielement, ist bezogen auf eine vertikale Mittelachse Y außenseitig an dem Halteelement 3 angeordnet, und liegt zum Teil an dem jeweiligen Flansch 13 an. Das elastische Element 2 weist eine Nut 17, bzw. eine Radialnut 17 auf, wobei die Nut 17 auf ihrer von der vertikalen Mittelachse Y wegorientierten Seite eine Stufe aufweist, so dass der Gegenanschlagbereich 6 gebildet wird. Insofern ist das elastische Element 2 in diesem Bereich mit einem geringeren Durchmesser ausgeführt, als auf der zur Mittelachse Y orientierten Seite der Nut 17. Der Anschlagbereich 4 ist so zum Gegenanschlagbereich 6 mittels des Spaltes 8 beabstandet. Das Halteelement ist beispielhaft als metallische Platte ausgeführt, wobei die beiden erkennbaren Grundkörper 9 natürlich als einstückig ausgeführt angesehen werden können. An dem Gegenanschlagbereich 6 ist eine Hilfslinie 18 erkennbar, welche lediglich zur Erhöhung des Kontrastes des Gummikörpers bzw. des elastischen Elementes 2 dient, damit die sphärische Kontur des Gummianschlages deutlich sichtbar wird. Auch die Radialnut 17 ist kein beschränkend wirkendes Konstruktionsmerkmal, sondern begünstigt die Spannungsverteilung im Gummi bzw. in dem elastischen Element 2.

Die jeweilige Wölbung sowohl des Anschlagbereiches 4 als auch des Gegenanschlagbereiches 6 ist gleich orientiert, und weist jeweils den gleichen Radiusbetrag auf. Daraus ergibt sich der kreisförmige Spaltverlauf, mit einer Mittellinie dessen Mittelpunkt Y1 auf der vertikalen Mittelachse Y liegt. Auch das elastische Zentrum Y2 der Dämpferbuchse 1 liegt auf der vertikalen Mittelachse Y. Der Radiusbetrag des kreisförmig verlaufenden Spaltes 8 ist günstiger Weise so gewählt, dass ein axialer Abstand (Pfeil Y3) zwischen Y1 und Y2 möglichst klein ist. Bevorzugt wäre, wenn Y1 und Y2 zusammenfallen würden, also deckungsgleich wären.

Wie in Figur 1 deutlich zu sehen, sind sowohl der Anschlagbereich, also ein Abschnitt des Flansches, als auch der Gegenanschlagbereich im Gegensatz zu der vorteilhaften Ausgestaltung nach Figur 2 geradlinig bzw. plan ausgeführt. Sobald die Buchse z.B. durch die Dämpferkraft um einen definierten Betrag ausgelenkt wird, gelangt der Anschlagbereich in Kontakt mit der Gegenanschlagfläche bzw. dem Gegenanschlagbereich. Insofern sind der Anschlagbereich und der Gegenanschlagbereich als Endanschläge anzusehen, welche einen signifikanten Betrag zur Steifigkeit zuführen, so dass die erforderliche progressive Steifigkeits- bzw. Federkurve 19 (Figur 5) erreichbar ist. Dies gilt sowohl für die Ausgestaltung nach Figur 1 als auch nach Figur 2. In den Figuren sind weitere Komponenten des Federbeins, wie z. B. Federteller und Schraubenfeder nicht dargestellt. Denn wesentlich ist, dass der Anschlagbereich 4 und der Gegenanschlagbereich 6 sphärisch ausgeführt sind.

Bei solchen Dämpferbuchsen nach Figur 1 wurde beobachtet, dass sich die axialen Steifigkeitseigenschaften mit einer in der Blattebene oder senkrecht dazu dargestellten Kippbewegung verändern, bzw. dass die Dämpferbuchsen empfindlich gegen winklige Bewegungen oder auch kardanische Bewegungen sind. Solche Abweichungen aus der idealen, also wenn z. B. die Kolbenstangenachse nicht parallel zur Buchsenachse ist, sind möglich aufgrund von Karosserie-/, aber auch Chassis-/ und Radaufhängungstoleranzen oder der Radaufhängungskinematik. Ein solcher Zustand ist beispielhaft in Figur 1 dargestellt. Wie erkennbar, ist der Anschlagbereich aus seiner horizontal ausgerichteten Position winklig herausgedreht, so dass dessen freie Kante in Richtung zum Gegenschlagbereich orientiert ist und so verfrüht mit dem Gegenanschlagbereich in Kontakt tritt. Dieser Kontakt verändert unmittelbar die Steifigkeits- bzw. Federeigenschaften, und zwar so, dass der lineare Bereich kleiner wird und die Progression früher beginnt, wie Figur 5 anhand des entsprechenden Graphen 21 erläutert. Damit werden aber auch unmittelbar die Isolations- und Dämpfungseigenschaften des Systems "Dämpfer mit Dämpferbuchse", und damit der Fahrkomfort und die Fahrzeugreaktionen beim Anlenken in Summe zum schlechteren hin verändert. Insofern ist das bekannte System extrem empfindlich gegen Abweichungen aus der idealen, welche z. B. aufgrund der Kinematik der (Rad-)Aufhängung erzeugt wird.

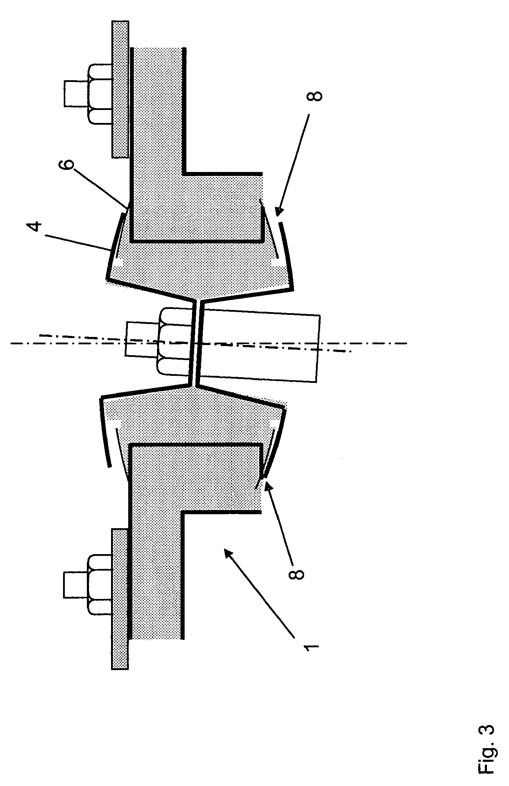

Mit der Erfindung dagegen ist dieser Nachteil durch die sphärische Ausgestaltung des Anschlagbereiches 4 und des Gegenanschlagbereiches 6 aufgehoben oder zumindest gemildert. Wie der direkte Vergleich der Figur 3 zur Figur 1, welche jeweils eine aus der neutralen Position heraus gekippte Dämpferbuchse 1 zeigen, erkennen läßt, ist der Anschlagbereich 4 bei der Ansicht nach Figur 3, in der Zeichnungsebene unten links und oben rechts immer noch etwas beabstandet zum Gegenanschlagbereich 6. Es ist also immer noch ein Spalt 8, wenn auch ein kleiner vorhanden. Naturgemäß weisen die jeweils schräg gegenüberliegenden Seiten einen größeren Spalt 8 auf. Daraus ergibt der in Figur 5 dargestellte Graph 22.

In Figur 5 bezeichnet die X-Achse die axiale Auslenkung und die senkrechte Achse Y die Steifigkeit. Wie erkennbar geht der Graph 19 (neutrale Position) über einen linearen Bereich 23 in die Progression 24 über. Der Graph 19 beschreibt die axiale Steifigkeit, wobei dieses Verhalten sowohl für den Stand der Technik nach Figur 1 als auch für eine nach der Erfindung vorteilhaft ausgeführte elastische Buchse 1 bzw. Dämpferbuchse 1 im kardanisch nichtausgelenkten Zustand gilt. Bei dem Graph 21 (axiale Steifigkeit im kardanisch ausgelenkten Zustand nach Figur 1) dagegen wirkt direkt die Progression 24. Der Graph 22 zeigt das Verhalten nach Figur 3 (axiale Steifigkeit im kardanisch ausgelenkten Zustand einer Dämpferbuchse nach der Erfindung; Idealerweise sollte sich die Kennlinie unter kardanischer Auslenkung gar nicht verändern). Erkennbar ist, dass noch ein bestimmter linearer Bereich 23 vor Wirkung der Progression 24 erhalten bleibt.

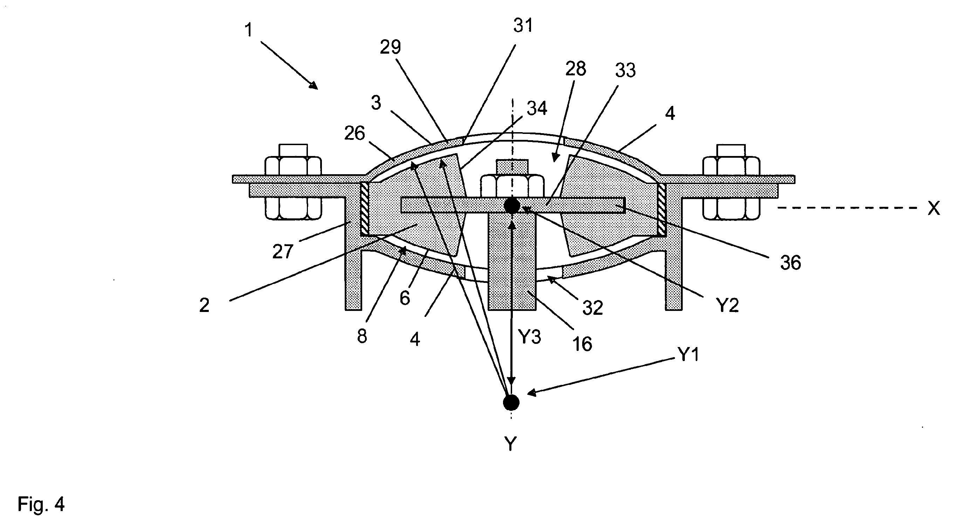

Ebenso wirkt sich Ausgestaltung der Dämpferbuchse 1 nach Figur 4 aus.

Das Halteelement 3 ist aus im Querschnitt gesehen oberen und unteren Elementen 26, 27 gebildet, welche so ausgeführt sind, dass ein im Querschnitt gesehen ellipsenartiger Innenraum 28 gebildet ist, wenn beide Elemente 26, 27 miteinander zu einem ellipsenartigen Gehäuse verbunden sind. Wie erkennbar, sind quasi zwei sphärische Flächen ausgebildet. Das jeweils obere und untere Element 26, 27 weist dabei die vorteilhaft ausgeführten Anschlagbereiche 4 auf, welche entsprechend konvex als Flansch 29 ausgeführt sind. Die jeweils aufeinander zu orientierten Flansche 29 sind mit ihren Stirnkanten 31 beabstandet, so dass eine Eingriffsöffnung 32 gebildet, in welche die Dämpferkolbenstange 16 einführbar ist. Das elastische Element 2 ist in dem Innenraum 28 angeordnet und weist den korrespondierend zum Anschlagbereich 4 ausgeführten Gegenanschlagbereich 6 auf, welcher also auch konvex ausgeführt ist, wobei der Spalt 8 zwischen beiden Bereichen 4 und 6 angeordnet ist. Mit dem elastischen Element 2 ist ein Befestigungselement 33 hinreichend verbunden, welches sich im Querschnitt gesehen quer durch den Innenraum 28 erstreckt, so dass die jeweils seitlichen Befestigungsbereiche des Befestigungselement 33 von dem elastischen Element 2 umfaßt sind, bzw. darin befestigt sind. Das Befestigungselement 33 dient zum Befestigen der Dämpferkolbenstange 16.

Das elastische Element 2 ist mit seinen freien Stirnkanten 34 in Richtung zur Mittelachse Y orientiert, endet aber beabstandet zu dieser. Die Stirnkanten 34 sind bezogen auf die horizontale Mittelachse X jeweils schräg von der vertikalen Mittelachse Y in Richtung zum Anschlagbereich 4 geneigt orientiert. Mit seinem Befestigungsende 36 ist das elastische Element 2 an dem unteren Element 27 befestigt. Das Befestigungsende 36 ist in Querschnitt gesehen zylinderförmig ausgeführt, und geht in den im wesentlichen sphärisch ausgeführten Gegenabschlagbereich 6 über. Das elastische Zentrum Y2 der elastischen Buchse 1 liegt wie der Kreismittelpunkt Y1 auf der Mittelachse Y, wobei der Radius des kreisförmig verlaufenden Spaltes 8 so gewählt werden sollte, dass der Abstand Y3 möglichst gering ist.

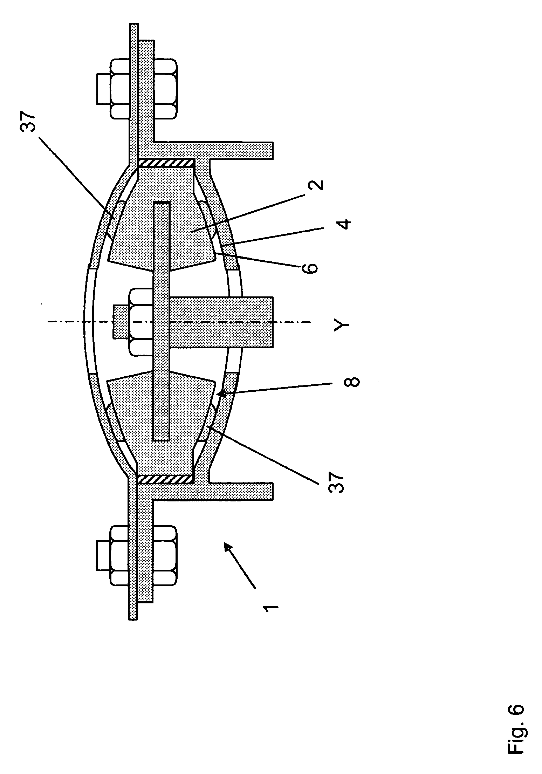

Wie in den Figuren erkennbar, sind im Querschnitt gesehen vier Spalte 8 dargestellt, zwei auf jeder Seite der Mittelachse Y. Natürlich sind die Spalte 8, und somit natürlich auch die Anschlagbereiche 4 und Gegenanschlagbereiche 6 in Umfangsrichtung bevorzugt durchgehend vorgesehen. Natürlich ist der Spalt 8 nicht notwendigerweise durchgehend, was sowohl für die Ausgestaltung nach Figur 4 als auch für die Ausgestaltungen nach Figur 2 bzw. 3 gelten kann; es kann sein, dass die lineare Steifigkeit erst dadurch erreichbar ist, dass in schmalen Segmentbereichen kein Spalt vorhanden ist, wie beispielhaft Figur 6 als Weiterbildung zur Dämpferbuchse 1 nach Figur 4 zeigt. Hier sind beispielhaft Verdickungen 37 vorgesehen, welche sich von der sphärischen Oberfläche (bzw. des Gegenanschlagbereiches 6) des elastischen Elementes 2 in Richtung zum Anschlagbereich 4 erstrecken, bzw. bevorzugt an diesen anliegen. Die Verdickungen 37 sind lediglich beispielhaft quasi kreisförmig ausgeführt, und nur beispielhaft sekantenartig geschnitten. Die Progression wird aber dennoch durch die Überwindung des (Rest-)Spaltes erzeugt, und dieser wird erst durch die sphärische Ausformung unempfindlich gegen kardanische Auslenkung).

## Patentansprüche

1. Elastische Buchse, welche ein elastisches Element (2) aufweist, das in einem Halteelement (3) aufgenommen ist, wobei das Halteelement (3) einen Anschlagbereich (4) aufweist, der zu einem Gegenanschlagbereich (6) des elastischen Elementes (2) so beabstandet ist, dass in einer neutralen Position ein Spalt (8) ausgebildet ist.
**dadurch gekennzeichnet, dass**
der Anschlagbereich (4) des Halteelementes (3) und der Gegenanschlagbereich (6) des elastischen Elementes (2) im Querschnitt gesehen mit einem sphärischen Verlauf mit gleich orientierten Wölbungen jeweils gleichen Betrages ausgeführt sind.

2. Elastische Buchse nach Anspruch 1,
**dadurch gekennzeichnet, dass**
Anschlagbereich (4) des Halteelementes (3) und der Gegenanschlagbereich (6) des elastischen Elementes (2) bezogen auf eine Horizontalachse X im Querschnitt gesehen nach außen gewölbt sind.

3. Elastische Buchse nach Anspruch 1 oder 2,
**dadurch gekennzeichnet, dass**
der Spalt (8) entsprechend der Ausgestaltung des Anschlagbereiches (4) und des Gegenanschlagbereiches (6) einen kreisförmigen Verlauf aufweist.

4. Verwendung einer elastischen Buchse (1) nach einem der vorhergehenden Ansprüche für ein oberes Dämpfer- oder Federbeinstützlager einer Radaufhängung eines Kraftfahrzeuges.

## Claims

1. Elastic bush having an elastic element (2) which is received in a holding element (3), the holding element (3) having an abutment region (4) which is spaced apart from a counterabutment region (6) of the elastic element (2) so that a gap (8) is formed in a neutral position,
wherein
the abutment region (4) of the holding element (3) and the counterabutment region (6) of the elastic element (2) are designed, as seen in cross section, with a spherical profile having identically oriented curvatures each in an identical amount.

2. Elastic bush as claimed in Claim 1,
wherein
the abutment region (4) of the holding element (3) and the counterabutment region (6) of the elastic element (2) are curved outwardly, as seen in cross section, with respect to a horizontal axis X.

3. Elastic bush as claimed in Claim 1 or 2,
wherein
the gap (8) has a circular profile correspondingly to the configuration of the abutment region (4) and of the counterabutment region (6).

4. Use of an elastic bush (1) as claimed in one of the preceding claims for an upper damper or spring strut support bearing of a wheel suspension of a motor vehicle.

## Revendications

1. Douille élastique, comprenant un élément élastique (2) qui est reçu dans un élément de retenue (3), l'élément de retenue (3) comprenant une zone de butée (4) qui est espacée d'une zone de contre-butée (6) de l'élément élastique (2) de telle sorte qu'un interstice (8) soit réalisé dans une position neutre,
**caractérisée en ce que**
la zone de butée (4) de l'élément de retenue (3) et la zone de contre-butée (6) de l'élément élastique (2) sont réalisées, vu en section transversale, avec une allure sphérique présentant des courbures orientées de manière identique et à chaque fois de même valeur.

2. Douille élastique selon la revendication 1,
**caractérisée en ce que**
la zone de butée (4) de l'élément de retenue (3) et la zone de contre-butée (6) de l'élément élastique (2) sont, vu en section transversale, courbées vers l'extérieur par rapport à un axe horizontal X.

3. Douille élastique selon la revendication 1 ou 2,
**caractérisée en ce que**
l'interstice (8) présente une allure circulaire conformément à la configuration de la zone de butée (4) et de la zone de contre-butée (6).

4. Utilisation d'une douille élastique (1) selon
l'une quelconque des revendications précédentes pour un
palier de support supérieur d'amortisseur ou de jambe de force d'une suspension de roue d'un véhicule automobile.
